# EUROPEAN PATENT SPECIFICATION

(11) **EP 2 246 949 B1**
(45) Date of publication and mention of the grant of the patent: **13.03.2019**
(21) Application number: 10380055.3
(22) Date of filing: 14.04.2010
(51) Int. Cl.: H02G 3/18, H02G 3/38

(54) **Floor box that includes for different types of installations with different mechanism formats**
Unterflurgerätedose für unterschiedlichen typen von installationen mit unterschiedlichen typen von mechanismus
Boîte de jonction pour le sol pour des types différents d'installations avec des types différents de mécanismes

(30) Priority: 29.04.2009 ES 200900810 U
(43) Date of publication of application: 03.11.2010
(73) Proprietor: Simon Connect, S.L., 08013 Barcelona (ES)
(72) Inventor: Codina, Maria Cristina Moret, 08021 Barcelona (ES)
(74) Representative: Espiell Volart, Eduardo Maria

(56) References cited:
- CN-Y- 2 444 023
- CN-Y- 2 847 600
- CN-Y- 201 126 949
- DE-A1- 19 625 187

## Description

Floor box including connection modules destined for adapting electrical, voice and data, and multimedia mechanisms or other types of installations in its interior.

The object of this invention is a floor box that includes connection modules destined for adapting electrical, voice and data, and multimedia mechanisms or other types of installations with different mechanism formats in its interior.

At present, there are an increasing number of electrical data transmission devices or multimedia installations that require connection at a same point so as not to occupy work space, due to which floor boxes where said connections can be made are disposed in many places. The large number of mechanisms and devices to be connected, such as mobile phone chargers, electrical plugs, memory elements with USB connection, etc., requires that said boxes have considerable available internal capacity. In the floor boxes that currently exist in the market, mechanisms are normally installed either oriented upwards, in such a manner that once the device has been positioned the lid cannot be closed, or oriented perpendicular to the surface, but with the mechanisms disposed opposite each other, which implies that once a device is connected to a mechanism, the available space is considerably reduced, interfering in the connection of the directly opposite mechanism.

Most workstation flooring is cleaned using wet methods, such as mops, buffing machines, etc.; said means must pass over the boxes, with the risk that the water or cleaning liquid may come into contact with the current. Although floor boxes with protection against water exist, said protection is normally achieved by means of gaskets or equivalent methods, which substantially raise final product cost.

Floor boxes should include lids that resist the harsh mechanical requirements of installations in floors, over which persons, automatic cleaning equipment, small hoists for maintenance of lighting, etc. may pass. In the boxes currently available in the market, these problems are solved by means of metal plates that reinforce the structure of the box or by directly manufacturing said metal plates, with the ensuing increase in price.

For installers and customers, the cost of the product itself is just as important as the time required to install it, as operator price/hour accounts for a large percentage of the final price. The boxes currently known in the market require most of the equipment to be connected during installation thereof, implying that the operator must connect the mechanisms in the floor rather than in the workshop, where he would only have to splice the feeder cables.

In some installations, electrical installers are not the same as the voice and data installers, therefore the latter normally install the voice and data cables and leave the cables with the connectors pre-assembled so that the electrical installers can finish assembling the box, but in the boxes that exist in the market the pre-assembled connectors cannot be passed through the floor boxes, but rather after having installed the box.

In turn, the absence of electromagnetic interferences in communication lines caused by the oscillations suffered by the power line is of vital importance, given the rate at which communications and voice and data transmission technology is being used. Current systems either do not envisage this problem or solve it by means of a metal plate that must be connected independently to the grounding circuit.

Prior art CN 2 444 023 discloses a floor box that includes connection modules destined for adapting electrical voice and data, and multimedia mechanisms or other types of installations with different mechanism formats in its interior, characterized in that it comprises a lid that is assembled on a frame which, in turn, includes modules in its interior, differentiated from each other by the mechanism format that can be installed therein, said mechanism being of different types (electrical, voice and data, etc.). This floor box also comprises a drain hole in the bottom. However, this floor box doesn't comprise a groove made around the contour of the frame where the lid rest, being slightly inclined to prevent water from becoming trapped therein and in such a manner that it forces the water to slide toward draining holes, allowing the water to be channeled toward the exterior.

Prior art CN 201 126 949 discloses a floor box that includes connection modules destined for adapting electrical voice and data, and multimedia mechanisms or other types of installations with different mechanism formats in its interior, characterized in that it comprises a lid that is assembled on a frame which, in turn, includes modules in its interior, differentiated from each other by the mechanism format that can be installed therein, said mechanism being of different types (electrical, voice and data, etc.). This floor box also comprises a drain hole. However, this floor box doesn't comprise a groove made around the contour of the frame where the lid rest, being slightly inclined to prevent water from becoming trapped therein and in such a manner that it forces the water to slide toward draining holes, allowing the water to be channeled toward the exterior.

All of these drawbacks are advantageously resolved by means of the floor box of the present invention which, among the different variants, depending on the number of mechanisms to be installed, comes in the form of a round box having the mechanisms oriented approximately perpendicular to the surface, in such a manner that maximum space is generated in its interior to be able to connect the devices, with the added advantage that said mechanisms do not coincide in an opposed manner; therefore, when a device is connected to a mechanism, it does not interfere with the connection of devices for the rest of the mechanisms.

Said floor box resolves the system for protecting the floor box against water by means of grooves that channel the water that enters the box toward drainage holes distributed along the perimeter thereof. These grooves and drainage holes ensure that, even if water penetrates inside the box, it will never come into contact with the active parts that could be in its interior, as it diverts the water directly outside the box.

The aforementioned floor box that is the object of the invention includes a lid preferably manufactured from plastic material which, thanks to the carefully designed geometry of ribs disposed along its interior, resists any mechanical requirement without the need to incorporate any other part and with a cheaper material than boxes manufactured directly from metallic materials.

In turn, the box is composed of a frame whereon the modules that incorporate the mechanisms are assembled. Said modules may be wired by the installer in his workshop, where he has all the necessary material to make the connections in ergonomically better working conditions, thereby avoiding having to transport all the materials, leaving them prepared for splicing with the cables of the installation onsite, or has the possibility of acquiring directly pre-wired products from the factory, with the ensuing reduction in installation time.

Said modules have adequately sized pre-perforations for directly passing the connector through the module up to the connection mechanism, without having to previously install the box before connecting the connectors to the voice and data cables, thereby allowing the installations to be made on different days by independent installers.

The floor box that is the object of the invention includes a metal spacer plate which electromagnetically isolates the communications circuit from the voice and data circuit, connecting it directly to the grounding wire of the electrical bases using a fast connect system without having to wire it directly, greatly facilitating connection thereof to the grounding circuit.

The variable number of mechanisms to be disposed in the floor boxes, in accordance with the desired configuration, may require the use of different shapes, without altering the essentiality of the invention.

For the purpose of describing the characteristics of each of the floor box components and particularly the assembly process of each of said components, a set of drawings has been included wherein, by way of nonlimiting example, a practical embodiment of said floor box has been represented. In said drawings:

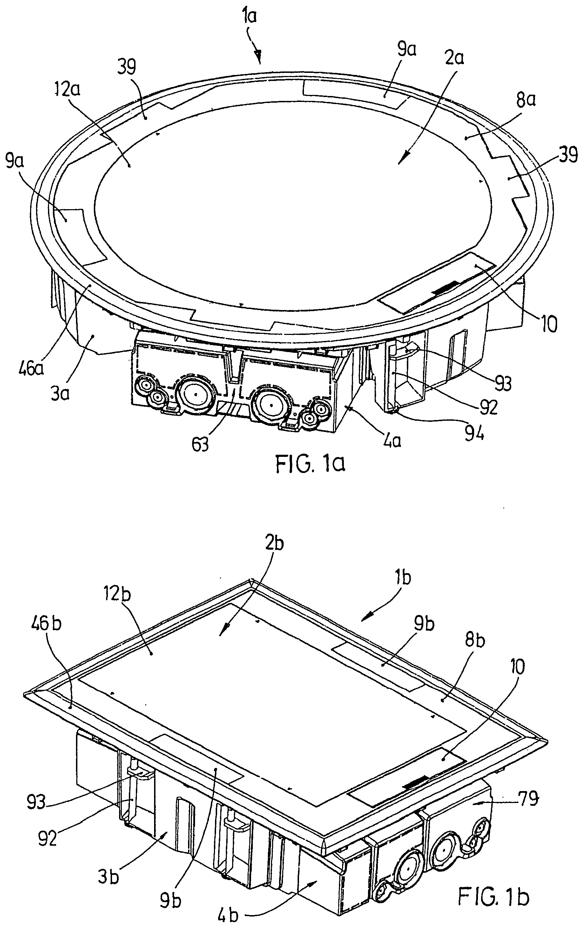

- fig. 1a: shows a perspective view of a floor box that is the object of this invention in one of its circular-shaped modalities, allowing assembly of three modules for mechanisms and with the lid closed;
- fig. 1b: shows a perspective view of a floor box, in another of its rectangular-shaped modalities for two modules for mechanisms;

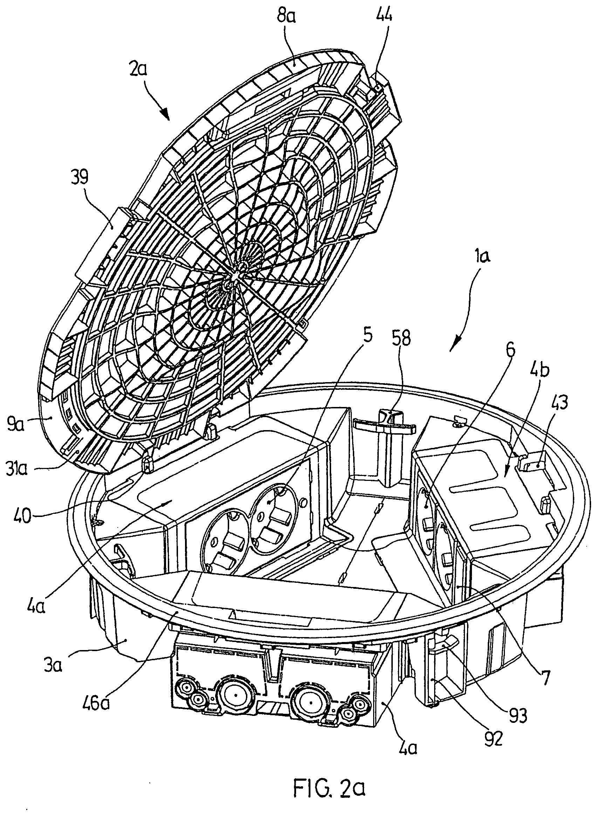

- fig. 2a: shows a perspective view of a circular floor box, with the three modules for mechanisms assembled and with the lid open;

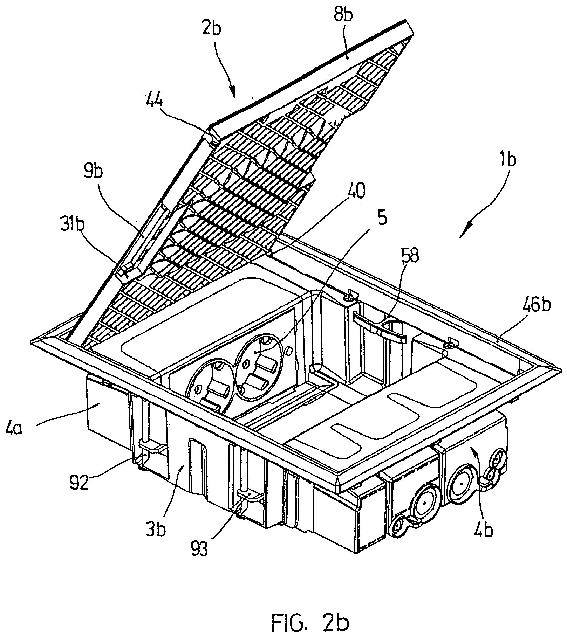

- fig. 2b: shows a perspective view of a rectangular floor box, with the two modules for mechanisms assembled and the lid open;
- fig. 3a: shows an exploded perspective view of a three-module circular floor box with each of the parts that form the assembly;
- fig. 3b: shows an exploded perspective view of a two-module rectangular floor box with each of the parts that form the assembly;

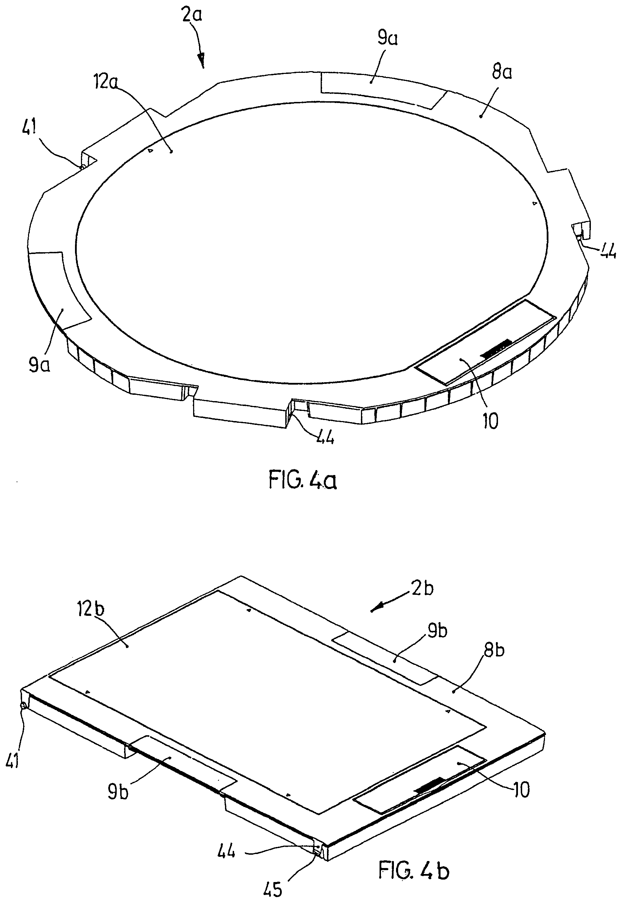

- fig. 4a: shows a perspective view of the lid for the three-module circular floor box, seen from above;
- fig. 4b: shows a perspective view of the lid for the two-module rectangular floor
box seen, from above;

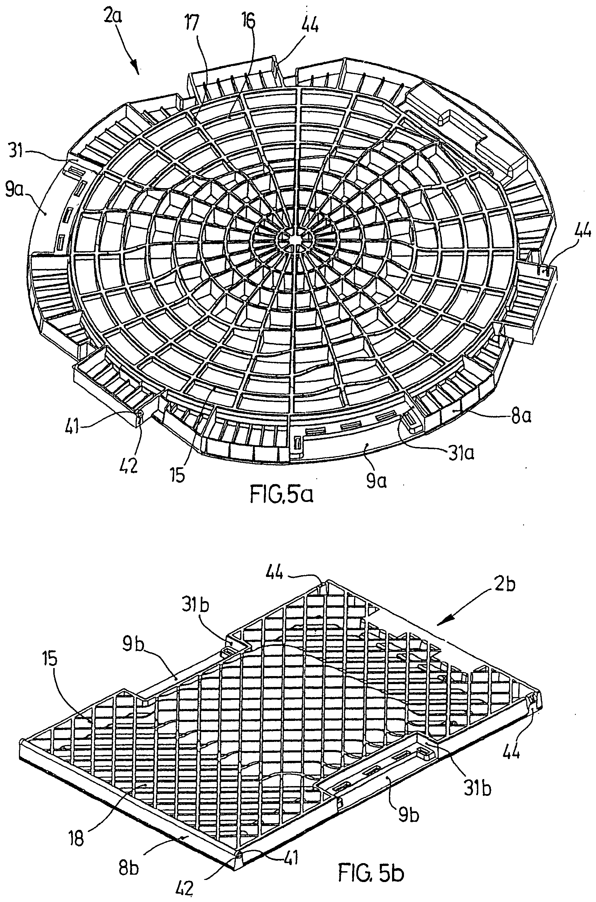

- fig. 5a: shows a perspective view of the lid for the three-module circular floor box seen from below, showing the geometry of the ribs;
- fig. 5b: shows a perspective view of the lid for the two-module rectangular floor box seen from below, showing the geometry of the ribs;

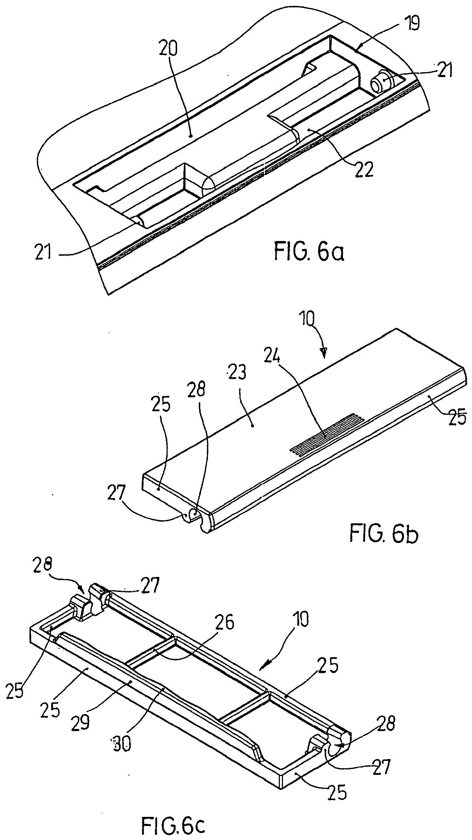

- fig. 6a: shows a perspective view of a detail of the rectangular recessing of the lid frame, wherein a lid pull handle is disposed;
- fig. 6b: shows a perspective view of the upper face of the lid pull handle;
- fig. 6c: shows a perspective view of the lower face of the lid pull handle;

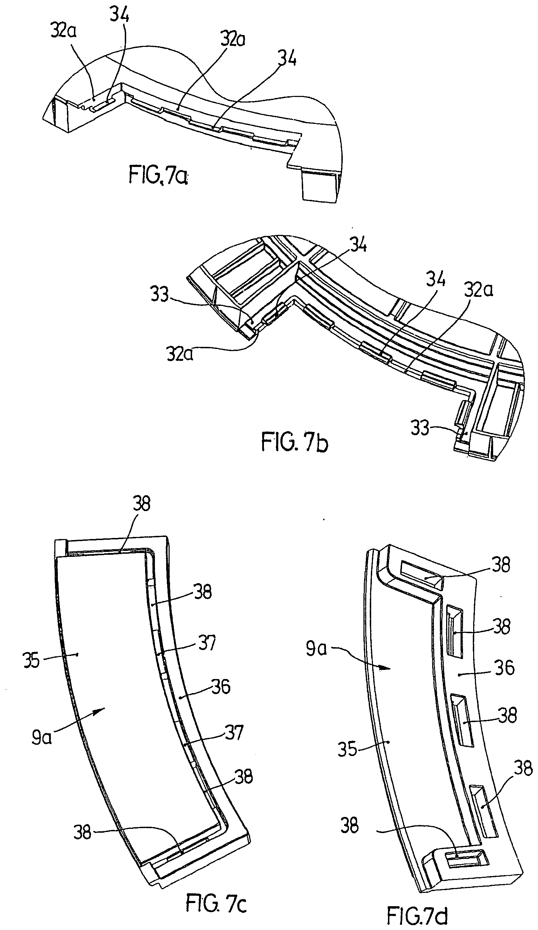

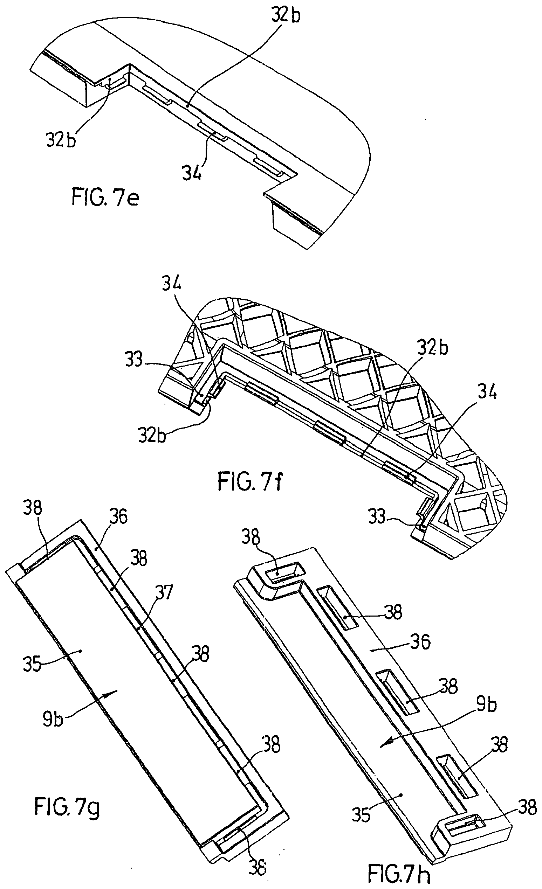

- fig. 7: shows a perspective view of a detail of a section of the circular lid wherein flexible cable pass-through windows are disposed, seen from the upper part;
- fig. 7b: shows a perspective view of a detail of a section of the circular lid wherein flexible cable pass-through windows are disposed, seen from the lower part;
- fig 7c: shows a perspective view of a flexible pass-through window for a circular lid, seen from the upper part;
- fig. 7d: shows a perspective view of a flexible pass-through window for a circular lid, seen from the lower part;
- fig. 7e: shows a perspective view of a section of a rectangular lid wherein flexible pass-through windows are disposed, seen from the upper part;
- fig. 7f: shows a perspective view of a section of a rectangular lid wherein flexible pass-through windows are disposed, seen from the lower part;
- fig. 7g: shows a perspective view of a flexible cable pass-through window for a rectangular lid, seen from the upper part;
- fig. 7h: shows a perspective view of a flexible cable pass-through window for a rectangular lid, seen from the lower part;

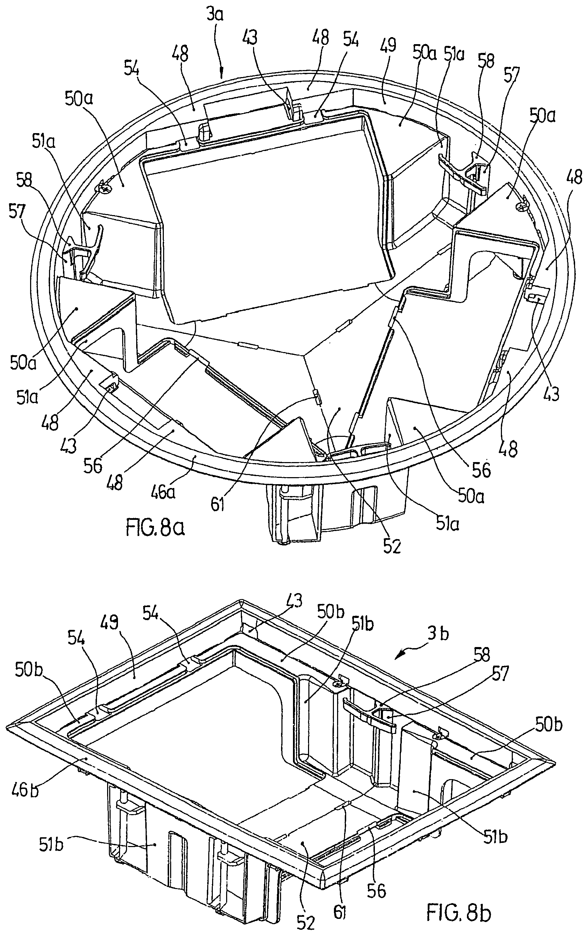

- fig. 8a: shows a persepctive view of the frame of the three-module circular floor box, seen from above;
- fig. 8b: shows a perspective view of the frame of two-module rectangular floor box, seen from above;

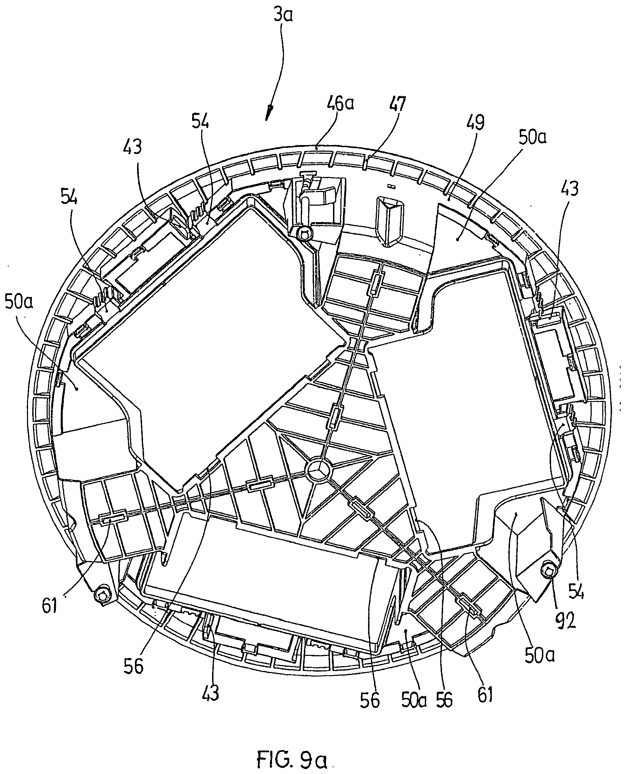

- fig. 9a: shows a perspective view of the frame of the three-module circular floor box seen from below, showing the geometry of the ribs;

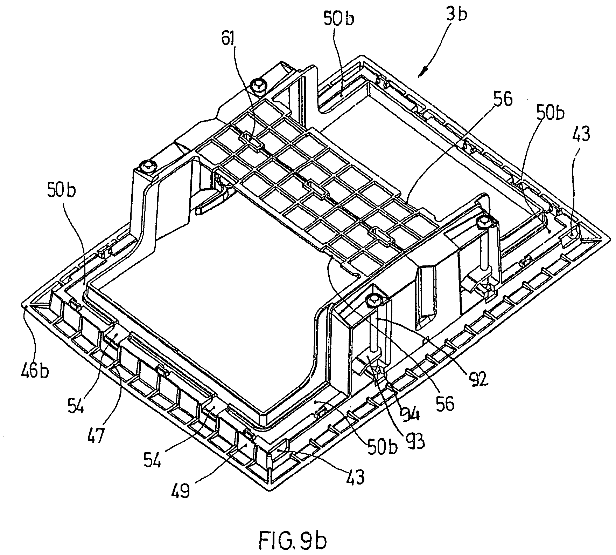

- fig. 9b: shows a perspective view of the frame of the two-module rectangular floor box seen from below, showing the geometry of the ribs;

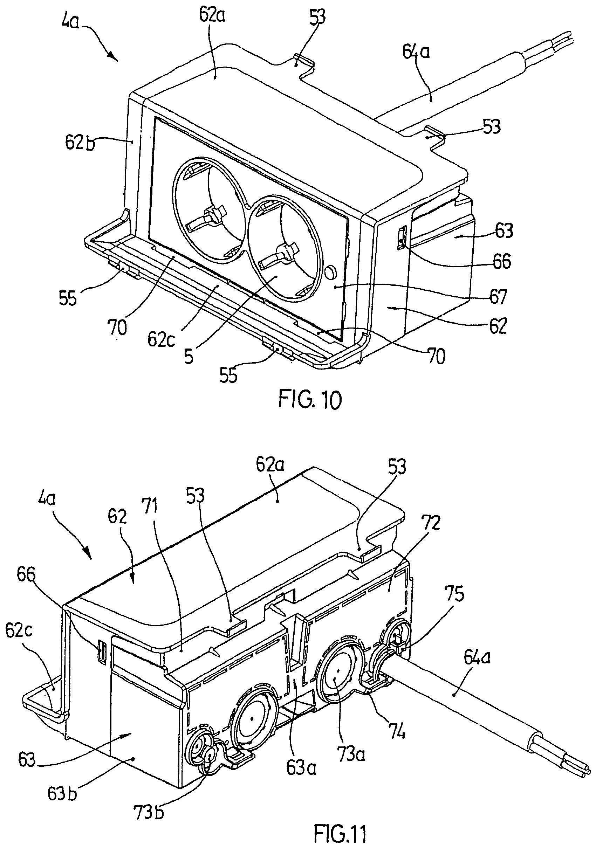

- fig. 10: corresponds to a perspective front view of one of the modules of specific format, assembled and wired as an example of a possible configuration;
- fig. 11: corresponds to a perspective rear view of the module of specific format of the preceding figure;

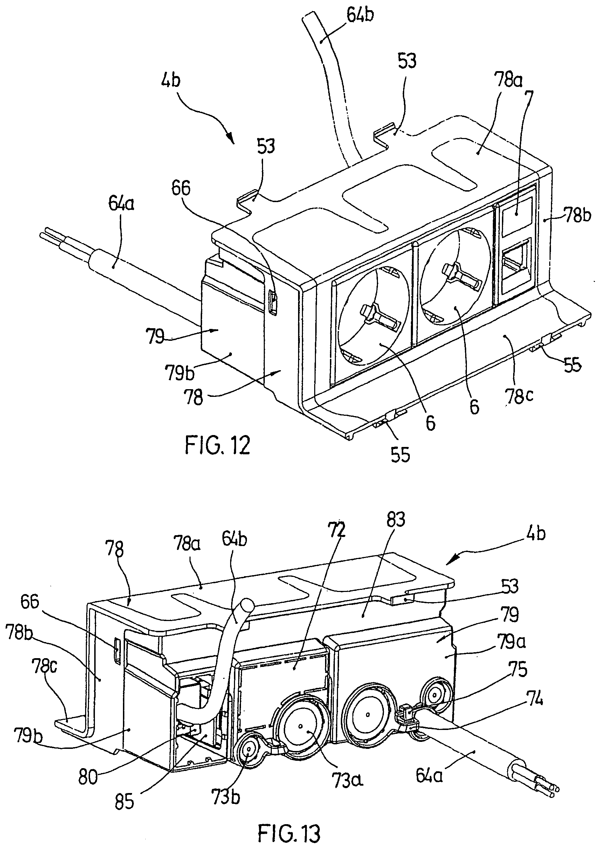

- fig. 12: corresponds to a perspective front view of one of the modules of standard-sized format, assembled and wired, as an example of a possible composition;
- fig. 13: corresponds to a perspective rear view of the module of standard-sized format of the preceding figure;
- fig. 14: corresponds to a perspective and exploded view of the different components that form the module of figure 10;
- fig. 14a: shows a detail of the joining system of the preceding figure;
- fig. 15: corresponds to a perspective and exploded view of the different components that form the module of figure 12;
- fig. 16: corresponds to a perspective view of a spacer plate separating the power circuits and communications circuits (telephony, voice and data, multimedia, etc.);

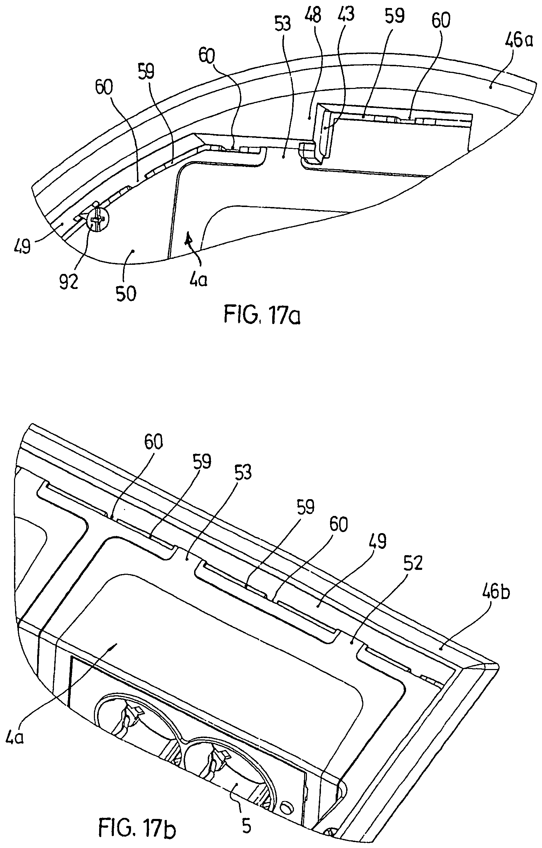

- fig. 17a: shows a perspective view of a detail of the grooves for channelling water and the drainage holes in a three-module circular floor box;
- fig. 17b: shows a perspective view of a detail of the grooves for channelling water and the drainage holes in a two-module rectangular floor box;
- fig. 18: shows a perspective view of an example of a box installed in a technical floor which has been cross-sectioned to show the system for fixing the box to said floor;
- fig. 19a: shows a front view of a box installed in a paved stoneware floor which has been conveniently cross-sectioned to show the system for fixing the box using a specific paving chamber;
- fig. 19b: shows a front view similar to the preceding view, with the difference that in this case it represents a paved parquet floor (thinner than stoneware), which shows that the paving chamber should and can be adjusted so as to maintain the minimum necessary height for the floor box.

In accordance with the aforementioned figures, the floor box (1a and 1b) that is the object of the present invention consists, mainly, of a lid (2a and 2b) that is assembled on a frame (3a and 3b) which in turn includes modules (4a and 4b) in its interior, differentiated by the format of the mechanism (5, 6 and 7) that can be installed, which can be of different types (electrical, voice and data, multimedia, etc.).

The *lid* (2a and 2b) is composed of a main lid (8a and 8b), preferably manufactured from a plastic material, whereto flexible cable pass-through windows (9a and 9b) are joined, preferably manufactured from an elastomer material, which are adapted to the shape of the cable egress; a pull handle (10) also forms part of the lid (2a and 2b), which pivots around itself, thereby allowing it to be conveniently gripped to easily open the lid.

The *main lid* (8a and 8b) is formed by a geometrically shaped plate associated to the shape of the floor box (1a and 1b), which can be circular, rectangular, etc., with the characteristic that pivots (41) used as a hinge axis are disposed along the contour thereof, allowing the aperture of the box by pivoting therearound, cutouts (31a and 31b) in the contour wherein the cable (9a and 9b) egress windows are disposed and flanges (44) disposed at the opposite end of the pivots (41) which serve as a closure by clipping of the lid. In the area opposite said pivots (41) there is also, in the upper part of the main lid (8a and 8b), a rectangular recess (19) wherein the pull handle (10) is disposed, facilitating the aperture of the lid (2a and 2b) once installed in the box (1a and 1b).

On the upper part, the main lid (8a and 8b) includes a mainly geometrically shaped recess (11a and 11b), coincident with the outer shape of the floor box (1a and 1b), prepared for the installer to give it the most suitable finish in each case, for example, a section of the same terrazzo as the rest of the floor or parquet or carpet, etc., or install a *flush lid* (12a and 12b) preferably manufactured from plastic material, although it can be found with a metal finish, in such a manner that it forms a surface completely flush with the rest of the box. The flush lid (12a and 12b) is fixed to the recess (11a and 11b) by means of projecting flanges (13) distributed around the edge of said flush lids, which are inserted into notches (14) evenly distributed along the perimeter of the recess (11a and 11b).

On the lower part, the main lid (8a and 8b) comprises ribbing (15), the geometry of which varies in accordance with the shape of the box; for example, in the circular boxes (1a) the ribs are concentric (16) and are crossed by radial ribs (17) and in the rectangular boxes (1b) the ribs (18) are equidistant to each other, forming a rhomboidal mesh having the characteristic that the height of these ribs increases progressively from the ends toward the interior, until reaching a height that ensures the necessary mechanical resistance of the lid, providing greater reinforcement to the floating inner part. The height of the aforementioned ribs (16, 17 and 18) at the ends is delimited by the modules (4a and 4b) that are assembled on the frame (3a and 3b).

On the rest of the frame of the upper surface, on one of the sides, there is a *rectangular recess* (19), within which there are deeper recesses (20) wherein the pull handle (10) is introduced and rests when in a closed position; at the front of the recess (19), on the two short sides of the rectangle, there is a pair of pivots (21) which act as axes of the hinge that allows the pivoting of said pull handle (10). In the centre and front of the rectangle there is a narrower recess (22) around which the front wall of said pull handle (10) pivots, said recess (22) becoming wider near the pivots (21) to leave room for the hinges of said pull handle (10) to pivot.

The *pull handle* (10) consists of a rectangular-shaped part, preferably manufactured from plastic material, coincident with the rectangular recess (19), which has a flat face (23) that, once installed, is exposed to view and flush with the lid (8a and 8b) frame. Said flat face (23) contains lines (24) that inform the user of the place where he must press to open said pull handle (10). The part has a perimeter rib (25) on its lower face that gives the part its structure, being complemented by transverse ribs (26) that join the two longest edges. In turn, the rib (25) forms the four lateral faces of the part. The shortest edges, at the end that corresponds to the lines (24), have projections (27) at the centre of which there is a circular orifice (28) open at the outermost end of the plate wherethrough the pivots (21) are introduced, creating the hinge assembly of the pull handle (10). The longest edge opposite the hinge axis has a projection (29) on the perimeter rib (25) which rotates 90° toward the interior of the part and has a curved shape (30), making the pull handle (10) more ergonomic.

*Cutouts* (31a and 31b) *for egress of the cables* of the connected devices are distributed over the surface of the main lid (8a and 8b), which may vary in number and location in accordance with the number of modules that can be installed in the box. Said cutouts have a crown segment or rectangular shape, depending on whether the box is circular or rectangular, respectively. A rib (32a and 32b) borders the cutout toward the interior, creating a groove (33) along the perimeter of the cutout. Flanges (34) oriented toward the exterior of the cutout (31a and 31b) are evenly distributed along the rib (32a and 32b) for fixing the flexible cable pass-through windows (9a and 9b).

The flexible cable pass-through windows (9a and 9b) have the same shape as the cutout (31a and 31b), as they are disposed thereon and fixed thereto. Manufactured from elastic material, they can be adapted to the egress of the cables of the devices that are connected to the boxes (1a and 1b). The flexible cable pass-through windows (9a and 9b) have two main planes, the first plane (35) corresponding to the exposed part once the window is assembled on the lid, and a second plane (36) that coincides with the perimeter of the part, which serves to fix the cable pass-through window to the main lid, in such a manner that it remains at a lower level and hidden once the part is assembled. The upper part of the plane (36) is assembled on the groove (33) of the cutout (31a and 31b); a groove (37) is disposed between the two planes (35) (36), wherein the rib (32) of the cutout (31a and 31b) is embedded. Pass-through orifices (38) have been made in the interior of said groove (37) wherethrough the flanges (34) of the cutout (31a and 31b) are introduced.

*Aperture of the lids* (2a and 2b) is achieved by pivoting around an axis, due to which in rectangular-shaped boxes (1b) one of the short ends of the lid is used as a rotation axis, but in circular-shaped boxes (1a) a sufficiently large cutout (39) is required so that the rotation axis is circumscribed within the circle of the lid (2a), in order to avoid interference between said lid and the frame (3a) on opening it. The rotation of the lids (2a and 2b) is achieved by means of a hinge (40) system, around which the whole lid pivots, wherein the direction of aperture thereof may be changed; the number of axes varies in accordance with the shape of the box, for example, three axes if it is circular or two axes if it is rectangular. In the case of multiple axes, the geometric shape necessary for the lid (2a and 2b) to pivot correctly over the frame (3a and 3b) must be repeated in each axis.

The *hinge* (40) of the lids is formed by pivots (41) disposed at the ends of the rotation axis of the lid that are farthest from each other, said pivots (41) having, at their ends, two inclined planes (42) starting from the centre of the pivot (41) and in the same direction as the entrance of the lid (2a) and (2b) in the frame, thereby allowing easy introduction and extraction of the lid without the need for tools. Said pivots (41) are introduced into elongated orifices (43) in the frame (3a and 3b), whereover the lid (2a and 2b) pivots, being distributed over the frame (3a and 3b) and allowing a change in the direction of aperture of the lid.

*Closure of the lids* (2a and 2b) is achieved by means of anchoring flanges (44) having a flat surface (45) perpendicular to the flange itself, which is pressure-anchored in the orifices (43) of the frame (3a and 3b) not used to form the hinge (40). Therefore, for example, in the circular lids (2a) these are disposed at the ends farthest from the pivots (41) of the cutouts (39) of said lid.

The *frame* (3a and 3b) consists of a part preferably manufactured from plastic material in the shape of the floor box (1a and 1b), which has a peripheral flap (46a and 46b) that rests on the ground and which, on its lower part, has a series of equidistant ribs (47) to give it greater mechanical resistance. Depending on the shape of the box, the corresponding flap (46a and 46b) may only have the shape of the lid (2a and 2b) frame or may include cavities (48) that adapt to the cutouts (39) of the lids, whereupon the lid and frame are fully adjusted. Said flap (46a and 46b) continues perpendicularly toward the interior to form the walls (49) that will interfere with the walls of the lids (2a and 2b), providing the necessary fit to close the floor box (1a and 1b). Said walls end in surfaces (50a and 50b) which include, flush with the floor and by means of clipping, the modules for mechanisms (4a and 4b). Said surfaces (50) continue with a rotation of approximately 90°, creating walls (51a and 51b) that originate the depth of the box and allow sufficient space for cable egress. Said walls end at the back (52) of the frame (3a and 3b) which, once the modules for mechanisms (4a and 4b) have been installed, leaves the box closed, preventing the user from accessing live parts. The modules for mechanisms (4a and 4b) are fixed, by means of flanges (53) disposed at the rear end of the upper part of the modules, to orifices (54) made in the surfaces (50a and 50b) of the frame (3a and 3b) and, in turn, by flanges (55) disposed at the front end of the lower part of the modules to bevelled recesses (56) at the bottom (52). Said bevelling allows these to be easily extracted once installed by introducing a flat screwdriver-type tool into said bevel. Columns (57) having an inner dovetail-type guide are disposed in the areas between modules, where the walls (49) reach down to the bottom (52), wherein a T-shaped part is introduced (58), perpendicular to said column (57), to guide and fix the cables of the devices that are connected to the mechanisms. These columns are disposed and centred underneath the flexible cable pass-through windows (9a and 9b) in such a manner that, on closing the lid, the cables are disposed underneath the flexible rubber, preventing these from being crushed on closing the lid.

The floor box must have a perfect fit to prevent water and dirt from entering. However, water can obviously enter when the lids are opened, due to which a series of channels that also include a series of drainage holes to evacuate the undesired water that enters the box have been included. A groove (59) around the contour where the lid rests has also been envisaged, in such a manner that it serves as a water evacuation well. Drainage holes (60) are evenly distributed around said groove which allow the water to fall out of the box, without coming into contact with the cable connections at any time. Said groove (59) is slightly inclined to prevent water from being trapped inside, in such a manner that it is forced to slide toward the drainage holes (60). The bottom (52) of the frame (3a and 3b) is slightly inclined toward the centre of the box. Additional drainage holes (60) have been made at the union of the planes in order to allow water that enters occasionally to exit.

The *modules for mechanisms with a specific format* (4a) are composed of two parts, a front part (62) where the front of the mechanisms (5) is embedded and a rear part (63) wherethrough the cables (64a and 64b) are introduced, joined together by means of orifices (65) made and disposed on the sides of the front part (62) and flanges (66) disposed on the side of the rear part (63). Once joined, the two parts form a closed assembly wherethrough the live part cannot be accessed.

The *front part* (62) is formed of a flat surface (62a) at the end of which flanges (53) are disposed that serve to fix the modules (4a and 4b) to the frame (3a and 3b), as explained earlier. At the opposite end, the part continues with a rotation, approximately perpendicular, forming the surface (62b) at the centre of which there is a rectangular cavity forming a frame whereon the plates (67) of specific format are assembled by means of clipping. In the interior of said frame, projections (68) are distributed over all the edges, whereon the outer part of said plate (67) rests, and the fixing flanges (69) of the plate (67) are fastened to the inner part thereof. At the end of the surface (62b) there is a surface (62c) that extends perpendicularly outwards formed by an extension of the surface (62b), weakened throughout the edge in such a manner that it acts like a hinge, allowing it to fold outwards. The folding edge includes a section of the lower projection (68), in such a manner that, once folded, it is completed and allows the fold to be firmly fastened on fixing the plate (67). Said surface (62c) includes, at each lateral end, flanges (62d) which are embedded by means of interlocking into the vertical walls (62c). Orifices (70) are disposed next to the folding edge, in such a manner that they allow drainage of the water that may enter the frame (3a and 3b) toward the exterior of the chamber. The flanges (55) that allow fixation to the frame (3a and 3b) are disposed on the opposite end. Said flanges are divided into groups of two units, in such a manner that, once the modules (4a and 4b) have been assembled on the frame (3a and 3b) they can be extracted by introducing a tool between said flanges (55) and effecting a levering action.

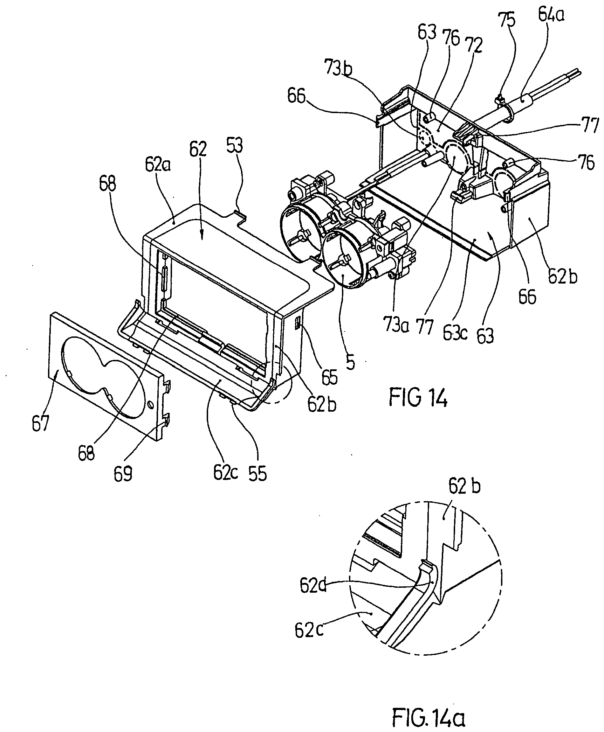

The *rear part* (63) has surfaces of a mainly rectangular prism shape without the upper surface or front surface, as can be observed in Fig. 14, in such a manner that, on interlocking with the front part, the volume where the mechanisms are installed is perfectly closed. The surface (63a) corresponds to the rear surface, on the upper part of which there is a cavity (71) due to the fact that in this area the frame (3a and 3b) includes a support wall for the modules. On the exterior of the rear surface (63a) there is a series of pre-perforations 872, 73a and 73b) of different shapes and sizes intended for helping the installer to introduce the cables (64a and 64b), tubes and even connectors (80) into the interior of the volume wherein the mechanisms are wired. By joining two of the aforementioned pre-perforations we obtain a flange (74) perforated along its interior, allowing the passage of a cable (64) clamp (75) which reduces the tensions suffered by the cables during the installation process. Four columns (76) of different heights are disposed along the interior of the rear surface (63a) for the possible screwing of a mechanism, such as for example a Schuko socket (5), shown in the example of Fig. 14. A pair of flanges (77) has also been disposed on the upper part of the rear surface and one on the lower part, which allow the fastening of mechanisms by clipping, such as a Schuko socket (5) or others. Orifices have been made at the base of said flanges which allow screwing of a mechanism if required. The lateral surfaces (63b) of the rear part include the flanges (66) that are coupled to the front part (62). The lower part (63c) is a mainly smooth surface which ensures the closure of the interior of the module. One of the flanges (77) for the clipping of mechanisms is disposed on the union with the rear surface (63a). At the opposite end of the lower surface (63c) the base is weakened to ensure fitting with the front part (62).

The *modules for mechanisms of standardised format* (4b) are composed of two parts, a front part (78) whereinto the front of the mechanisms (6 and 7) is fitted and a rear part (79) wherethrough the cables (64a and 64b) are introduced, being joined therebetween by means of orifices (65) made in the sides of the front part (78) and flanges (66) disposed on the side of the rear part (79). When the two parts are joined they form a closed assembly wherethrough the live part cannot be accessed.

The *front part* (78) is formed of a flat surface (78a) at the end of which the flanges (53) that serve to fix the modules (4a and 4b) to the frame (3a and 3b) are disposed, as explained earlier. At the opposite end, the part continues with a rotation, approximately perpendicular, forming a surface (78b) where rectangular apertures forming frames (81) are disposed, wherein the mechanisms (6 and/or 7) are assembled by means of clipping. Said frame, along the interior, has the necessary height for fastening the flanges (82) of the mechanisms fixed thereto. The mechanisms (6 and/or 7) rest on the outer part of the frame (81). There is a surface (78c) at the end of the surface (78b). At the opposite end, flanges (55) which allow fixation to the frame (3a and 3b) are disposed. Said flanges are divided into groups of two units in such a manner that, once the modules (4a and 4b) have been assembled onto the frame (3a and 3b), they can be extracted by introducing a tool between said flanges and effecting a levering action thereon.

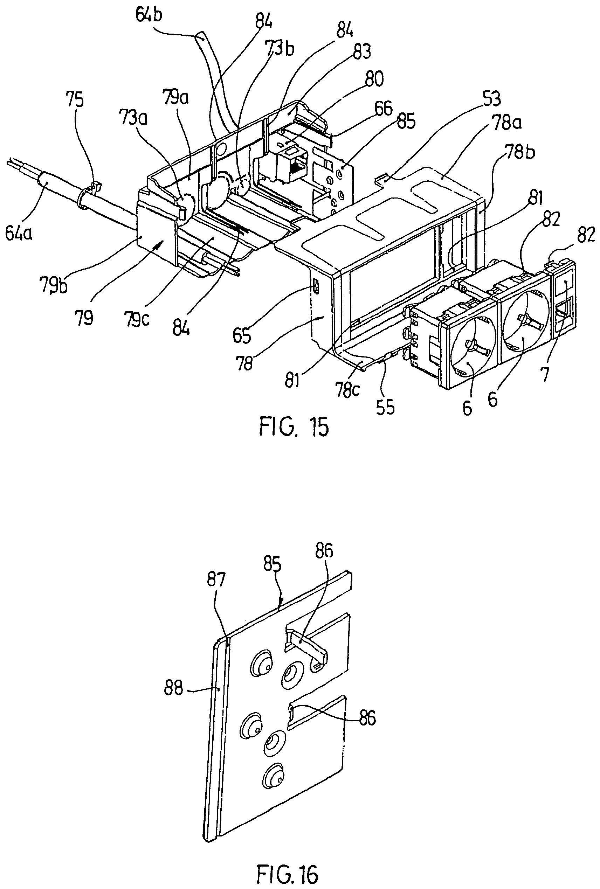

The *rear part* (79) has surfaces mainly in the form of a rectangular prism without the upper surface or front surface, as can be observed in Fig. 15, in such a manner that, on interlocking with the front part, the volume where the mechanisms are installed is completely closed. The surface (79a) corresponds to the rear surface, on the upper part of which there is a cavity (83), due to the fact that in this area the frame (3a and 3b) includes a support wall for the modules. Along the exterior of the rear surface (79a) there is a series of pre-perforations (72, 73a and 73b) of different shapes and sizes intended for helping the installer to introduce the cables (64a and 64b), tubes and even connectors (80) into the interior of the volume wherein the mechanisms (6 and/or 7) are wired. By joining two of the aforementioned pre-perforations we obtain a flange (74) perforated along its interior, allowing the passage of a cable (64) clamp (75) which reduces the tensions suffered by the cables during the installation process. Ribs (84) are disposed along the interior of the rear surface (79a) that vertically cross the surface (79a) and continue along a lower surface (79c). These ribs, formed by groups of two and slightly spaced apart, allow a spacer plate (85) to be disposed in the space created therebetween, thereby allowing the power circuits to be physically and electromagnetically separated from the voice and data circuits. The lateral surfaces (79b) of the rear part include the flanges (66) that are coupled to the front part (78). The lower surface (79c) is a surface formed of curves having the same diameter as the pre-perforations (73a and 73b).

The *spacer plate* (85) is a part generally formed of a metal plate, preferably rectangular in shape, wherein perpendicular cuts have been made at one of its ends, whereupon the cut material has been folded, thereby creating flanges (86) that allow the direct connection of the fast connect bases, avoiding intermediate grounding wire connections. A longitudinal recess (87) has been disposed at the opposite end to facilitate breakage of the end (88) in those cases where it interferes with the walls of the modules (4a and 4b).

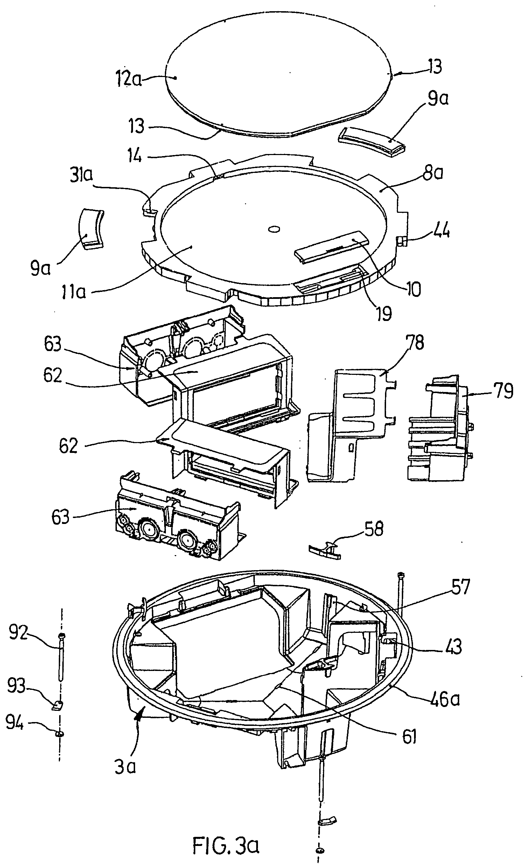

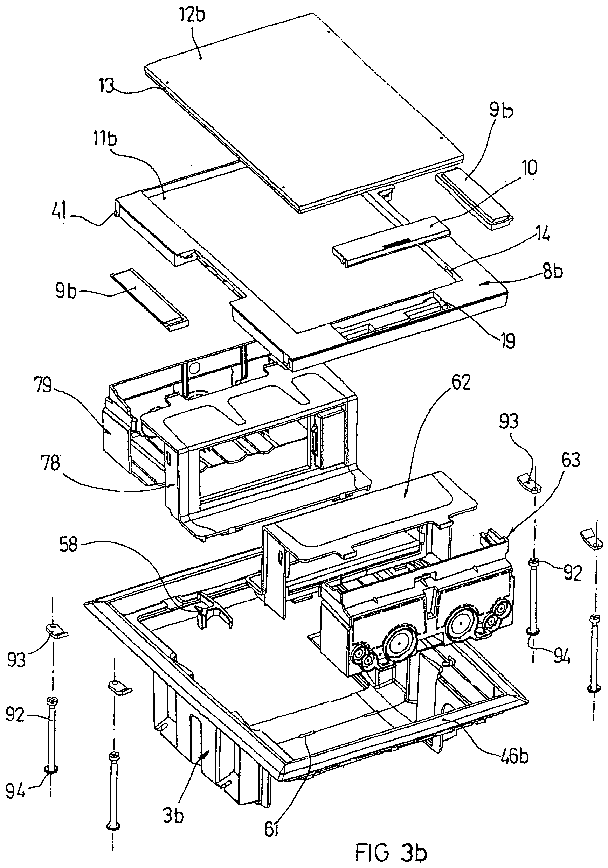

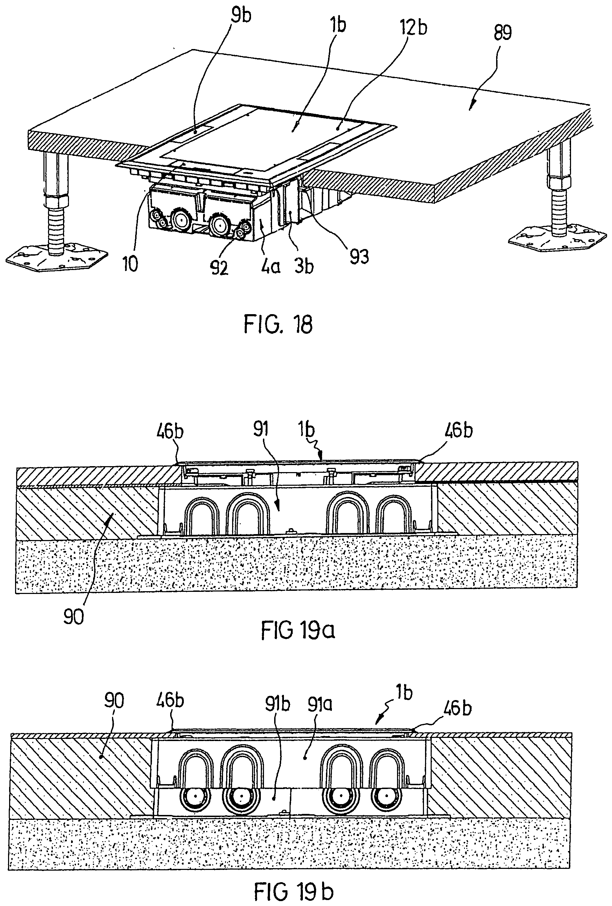

The aforementioned floor boxes (1a and 1b) can be fixed either directly to a technical floor (89), as shown in figure 18, or to pavement (90), by means of a height-adjustable register (91) by means of the two parts that compose the register (91a and 91b), as shown in figures 19a and 19b. In both cases, fixation of the box is achieved by means of screws (92) having claws (93) along the screw rod (92) which, on rotating the screw, ascend until exerting pressure between the nut in a reciprocal manner at the end of the screw and a lock washer (94). (See figures 3a and 3b, in addition to 9a, 9b and 18).

Having sufficiently described the object of the invention, we must point out that any variation in dimensions, shapes, aspect and outer finish, as well as the types of materials used in the practical embodiment thereof, does not alter the essentiality of the elements described herein, and is summarised in the following claims.

## Claims

1. Floor box (1a, 1b) that includes connection modules for electrical, voice and data, multimedia or other types of installation in its interior, comprising:
a lid (2a, 2b);
a frame (3a, 3b);
modules (4a, 4b) in its interior, differentiated form each other by the mechanism format (5, 6 and 7) that can be installed therein,
**characterized in that**
a groove (59) has been made around the contour of the frame (3a, 3b) where the lid (2a, 2b) rests, the groove (59) being slightly inclined to prevent water from becoming trapped therein and in such a manner that it forces the waterto slide toward draining holes (60), allowing the water to be channeled toward the exterior.

2. Floor box (1a, 1b) that includes connection modules for electrical, voice and data, multimedia or other types of installation in its interior, according to the preceding claim, **characterized in that** the lid (2a, 2b) is composed of a main lid (8a, 8b), preferably made of thermoplastic and mechanical-stress resistant material having a geographic shape equivalent to the shape of the floor box (1a, 1b), along the contour of which pivots (41) have been disposed for use as a hinge axis, allowing the aperture of the box by pivoting there around, cutouts (31a, 31b) along the contour of which flexible cable egress windows (9a, 9b) are disposed, which are adapted to the shape of the cable egress and, at the opposite end of the pivots (41), flanges (44) are disposed which are used as closures by clipping of the lid, there also being on the upper part of the main lid (8a, 8b) a rectangular recess (19) wherein the pull handle (10) is disposed, facilitating the aperture of the lid (2a, 2b) comprises ribbing (15), wherein the geometry varies depending on the shape of the box, the height of said ribbing increasing progressively from the ends toward the interior.

3. Floor box (1a, 1b) that includes connection modules for electrical, voice and data, multimedia or other types of installation in its interior, according to claims 1 and 2, **characterized in that** aperture of the lid (2a, 2b) is achieved by rotating the pivots (41) which have, at their ends, two inclined planes (42) starting from the centre of the pivot (41) in the same direction as the entrance of the lid (2a, 2b) in the frame (3a, 3b), allowing the introduction and extraction of the lid in orifices (43), preferably of elongated shape, of the frame (3a, 3b), whereon the lid (2a, 2b) pivots by way of an axis, said orifices (43) being distributed over the frame (3a, 3b) and varying in number depending on the shape of the box, allowing, in turn, a change in the direction of aperture of the lid, and **in that** the closure of the lids (2a, 2b) is achieved by means of flanges (44) which are pressure anchored in said orifices (43) of the frame (3a, 3b) not used to form a hinge (40).

4. Floor box (1a, 1b) that includes connection modules for electrical, voice and data, multimedia or other types of installation in its interior, according to any of the preceding claims, **characterized in that** the main upper lid (8a, 8b) includes, preferably, a geometrically shaped recess (11a, 11b) coincident with the outer shape of the floor (1a, 1b), prepared so that the installer can install the most suitable finish material and /or with metal finishes, so as to form a surface completely flush with the rest of the box which is fixed to the recess (11a, 11b) by means of projecting flanges (13) distributed around the edge of said flush lids (12a, 12b), fitting into notches (14) equally distributed around the perimeter of the aforementioned recess (11a, 11b).

5. Floor box (1a, 1b) that includes connection modules for electrical, voice and data, multimedia or other types of installation in its interior, according to any of the preceding claims, **characterized in that** the preferably rectangular recess (19) of the lid (2a, 2b) has deeper recesses (20) wherein the pull handle (10) is introduced and rest, in the front part of the recess (19), where a pair of pivots (21) which act as hinge axes are disposed on the two shorter sides of the rectangle, allowing rotation of the pull handle (10), there also being a narrower recess (22) on the central and front part of the rectangle whereon the front wall of the pull handle (10) pivots and which becomes wider near the pivots (21), and **in that** it includes the pull handle (10) in a manner coincident with the recess (19), which includes, in its lower part, projections (27) at the centre of which a circular orifice (28) has been opened at the outermost end of the plate where through the pivots (21) are introduced, creating the hinge assembly of the pull handle (10).

6. Floor box (1a, 1b) that includes connection modules for electrical, voice and data, multimedia or other types of installation in its interior, according to any of the preceding claims, **characterized in that** cutouts (31a, 31b) are distributed over the lid (2a, 2b) of the box (1a, 1b) for egress of the cables of the connected devices, so that bordering the cutout there is a rib (32a, 32b) oriented toward the interior of the box, creating a groove (33) originating from the rib (32a, 32b) itself, flanges (34) oriented toward the exterior of the cutout (31a, 31b) which are useful for fixing the flexible cable pass-through windows (9a, 9b), having the same shape as the cutout (31a, 31b), and two main planes, the first plane (35) corresponding to the exposed part once the window has been assembled on the lid and a second plane (36) corresponding, in turn, to the perimeter of the part that serves to fix the cable pass-through window to the main lid, in such a manner that the upper part of the plane (36) is assembled on the groove (33) of the cutout (31a, 31b), a groove (37) being disposed between the two planes where into the rib (32) of the cutout (31a, 31b) is embedded, wherein pass-through orifices (38) are disposed in the interior of said groove (37) where through the flanges (34) of the cutout (31a, 31b) will be introduced.

7. Floor box (1a, 1b) that includes connection modules for electrical, voice and data, multimedia or other types of installation in its interior, according to any of the preceding claims, **characterized in that** the frame is formed from a part manufactured, preferably, from plastic material of the same shape as the floor box (1a, 1b), having a flap (46a, 46b) that rest on the floor and continues perpendicularly toward the interior to form the walls (49) that will interfere with the walls of the lids (2a, 2b), providing the fit for the closure of the floor box (1a, 1,b), ending in surfaces (50a, 50b) wherein the modules for mechanisms (4a, 4b) are incorporated flush therewith and by means of clipping, which continue with a rotation of approximately 90°, creating walls (51a, 51b) which give depth to the box, allowing space for cable egress, the walls of which end at the bottom (52) of the frame (3a, 3b) which, once the modules for mechanisms (4a, 4b) are installed, leaves the box closed, preventing users from accessing the live parts, where said modules for mechanisms (4a, 4b) are fixed by means of flanges (53) disposed at the rear end of the upper part of the modules to orifices (54) made in the surfaces (50a, 50b) of the frame (3a, 3b) and, in turn, by flanges (55) disposed at the front end of the lower part of the modules to beveled recesses (56) at the bottom (52), where columns (57) having an inner dovetail-type guide are disposed, whereinto a T-shaped part (58) is introduced, perpendicular to said column (57), to guide and fix the cables of the devices connected to the mechanisms.

8. Floor box (1a, 1b) that includes connection modules for electrical, voice and data, multimedia or other types of installation in its interior, according to any of the preceding claims, **characterized in that** the bottom (52) of the frames (3a, 3b) is slightly inclined toward the centre of the box, to prevent water from becoming trapped therein and in such a manner that it forces the water to slide toward additional drainage holes (61) placed in the union of the planes in the bottom (52), allowing the water to be channeled toward the exterior.

9. Floor box (1a, 1b) that includes connection modules for electrical, voice and data, multimedia or other types of installation in its interior, according to any of the preceding claims, **characterized in that** the modules for mechanisms (4a, 4b) are composed of two parts, a front part (62, 78) and a rear part (63, 79), joined together by means of orifices (65) made in the sides of the front part (62, 78) and flanges (66) disposed on the side of the rear part (63, 79), where the front part (62, 78), is a part formed by a flat surface (62a, 78a), at the end of which the flanges (53) that serve to fix the modules (4a, 4b) to the frame (3a, 3b) are disposed and, at the opposite end, the part continues with a rotation, approximately perpendicular, forming the surface (62b, 78b) in the centre of which the plates (67) of the mechanisms (6) and/or mechanisms (7) are assembled by means of clipping, at the end of which there is a surface (62c, 78c) perpendicular toward the exterior, there being flanges (55) disposed at the opposite end which allow fixation to the frame (3a, 3b) and, on the other hand, the rear part (63, 79) has surfaces of rectangular prism shape without the upper surface or the front surface, the upper rear surface of which includes a cavity (71, 83) for resting the modules (4a, 4b) and wherein the lateral surfaces (63b) of the rear part include the flanges (66) that will be coupled to the front part (62), and **in that** a series of pre-perforations (72, 73a, 73b) of different shapes and sizes have been made in the exterior of the rear surface (63a, 79a) to help the installer to introduce cables (64a, 64b), tubes and even connectors (80) into the interior of the volume wherein the mechanisms are wired, and by joining two of the aforementioned perforations we obtain the flange (74) perforated along its interior, allowing the passage of a cable (64) clamp (75) that reduces the tensions suffered by the cables during the installation process.

10. Floor box (1a, 1b) that includes connection modules for electrical, voice and data, multimedia or other types of installation in its interior, according to any of the preceding claims, **characterized in that** the modules for mechanisms of specific format (4a) include a weakened area throughout the edge between the surfaces (62b) and (62c) in such a mannes that they act as a hinge, allowing outward folding thereof where the surface (62c) includes flanges (62d) at each lateral end which are interlocked into the vertical walls (62b) and, near the edge where the fold is made, spaces (70) have been left which allow drainage of water, and having along the interior of the rear surface (63a) four columns (76) of different heights and a pair of flanges (77) at the base of which orifices have been made having the same function as the columns (76), which allow the fixing of mechanisms by means of both screws and clipping.

11. Floor box (1a, 1b) that includes connection modules for electrical, voice and data, multimedia or other types of installation in its interior, according to any of the preceding claims, **characterized in that** the modules for mechanisms of standardised format (4b) contain ribs (84) on the rear surface (79a) thereof formed by groups of two and slightly spaced therebetween, which vertically cross the surface (79a) and continue along a lower surface (79c), allowing fixation of a space plate (85) in the space created therebetween, thereby allowing physical and electromagnetic separation between the power circuits and voice and data circuits.

12. Floor box (1a, 1b) that includes connection modules for electrical, voice and data, multimedia or other types of installation in its interior, according to any of the preceding claims, **characterized in that** the spacer plate (85) is a part generally formed from a metal plate preferably rectangular in shape, wherein perpendicular cuts have been made at one of the ends, subsequently folding the cut material to create flanges (86) that allow direct connection to the fast connect bases and at the opposite end of which there is a longitudinal recess (87) to facilitate the breakage of the end (88) in those cases where it interferes with the walls of the modules(4a, 4b).

13. Floor box (1a, 1b) that includes connection modules for electrical, voice and data, multimedia or other types of installation in its interior, according to any of the preceding claims, **characterized in that** one of its variants has a preferably circular shape that includes an odd number of modules, in such a manner that the mechanisms (5, 6, 7) are not disposed in opposition in opposition to each other, thereby facilitating connection by the users.

## Patentansprüche

1. Bodenkasten (1a, 1b), der Anschlussmodule für elektrische, Sprach- und Daten-, Multimediamechanismen oder andere Arten von Installationen in seinem Inneren einschließt, umfassend:
einen Deckel (2a, 2b);
einen Rahmen;
Module (4a, 4b) in seinem Inneren, die sich voneinander durch das Format (5, 6 und 7) des Mechanismus unterscheiden, das darin installiert werden kann, **dadurch gekennzeichnet, dass**
eine Nut (59) um die Kontur des Rahmens (3a, 3b) herum hergestellt worden ist, in der der Deckel (2a, 2b) ruht, wobei die Nut (59) leicht geneigt ist, um zu verhindern, dass Wasser darin eingeschlossen wird, und in einer derartigen Weise, dass das Wasser zum Gleiten in Richtung der Entwässerungslöcher (60) gebracht wird, wodurch ein Nachaußenleiten des Wassers ermöglicht wird.

2. Bodenkasten (1a, 1b), der nach dem vorhergehenden Anspruch Anschlussmodule für elektrische, Sprach- und Daten-, Multimediamechanismen oder andere Arten von Installationen in seinem Inneren einschließt, **dadurch gekennzeichnet, dass** der Deckel (2a, 2b) aus einem Hauptdeckel (8a, 8b) besteht, der vorzugsweise aus thermoplastischem und gegenüber mechanischen Beanspruchungen widerstandsfähigem Werkstoff hergestellt ist, wobei er eine geografische Form aufweist, die der Form des Bodenkastens (1a, 1b) entspricht, entlang dessen Kontur Drehzapfen (41) zur Verwendung als Scharnierachse angeordnet worden sind, wodurch das Öffnen des Kastens durch ein darum Herumschwenken ermöglicht wird, Ausnehmungen (31a, 31b), entlang deren Kontur flexible an die Form des Kabelaustritts angepasste Kabelaustrittsfenster (9a, 9b) angeordnet sind, und als Verschlüsse durch Einrasten des Deckels verwendete Flansche (44) an dem gegenüberliegenden Ende der Drehzapfen (41) angeordnet sind, wobei auch an dem oberen Teil des Hauptdeckels (8a, 8b) eine rechteckige Aussparung (19) ist, in der der Ziehgriff (10) angeordnet ist, wobei das Öffnen des Deckels (2a, 2b) erleichtert wird, und dadurch, dass er eine Verrippung (15) umfasst, wobei die Geometrie abhängig von der Form des Kastens variiert, wobei die Höhe der Verrippung von den Enden in Richtung des Inneren schrittweise zunimmt.

3. Bodenkasten (1a, 1b), der nach Anspruch 1 und 2 Anschlussmodule für elektrische, Sprach-und Daten-, Multimediamechanismen oder andere Arten von Installationen in seinem Inneren einschließt, **dadurch gekennzeichnet, dass** das Öffnen des Deckels (2a, 2b) durch Drehen der Drehzapfen (41) erreicht wird, die an ihren Enden zwei geneigte Ebenen (42) aufweisen, wobei sie von der Mitte des Drehzapfens (41) in derselben Richtung wie der Eintritt des Deckels (2a, 2b) in den Rahmen (3a, 3b) ausgehen, wodurch das Einführen und Herausnehmen des Deckels in/aus Öffnungen (43), vorzugsweise länglicher Form, des Rahmens (3a, 3b) ermöglicht wird, auf dem der Deckel (2a, 2b) durch eine Achse schwenkt, wobei die Öffnungen (43) über den Rahmen (3a, 3b) verteilt sind und in ihrer Anzahl abhängig von der Form des Kastens variieren, wodurch wiederum eine Änderung der Richtung des Öffnens des Deckels ermöglicht wird, und dadurch, dass der Verschluss der Deckel (2a, 2b) mittels Flanschen (44) erreicht wird, die in den Öffnungen (43) des Rahmens (3a, 3b) druckverankert sind, die nicht zum Bilden eines Scharniers (40) verwendet werden.

4. Bodenkasten (1a, 1b), der nach einem der vorhergehenden Ansprüche Anschlussmodule für elektrische, Sprach- und Daten-, Multimediamechanismen oder andere Arten von Installationen in seinem Inneren einschließt, **dadurch gekennzeichnet, dass** der obere Hauptdeckel (8a, 8b) vorzugsweise eine geometrisch geformte mit der äußeren Form des Bodenkastens (1a, 1b) übereinstimmende Aussparung (11a, 11b) einschließt, der so erstellt ist, dass der Installateur den geeignetsten Oberflächenwerkstoff und/oder Metalloberflächen installieren kann, um eine Fläche zu bilden, die vollständig mit dem Rest des Kastens bündig ist, der an der Aussparung (11a, 11b) mittels vorspringender Flansche (13) befestigt ist, die um den Rand der bündigen Deckel (12a, 12b) verteilt sind, die in Ausschnitte (14) passen, die gleichmäßig um den Umfang der vorgenannten Aussparung (11a, 11b) verteilt sind.

5. Bodenkasten (1a, 1b), der nach einem der vorhergehenden Ansprüche Anschlussmodule für elektrische, Sprach- und Daten-, Multimediamechanismen oder andere Arten von Installationen in seinem Inneren einschließt, **dadurch gekennzeichnet, dass** die vorzugsweise rechteckige Aussparung (19) des Deckels (2a, 2b) tiefere Aussparungen (20) aufweist, in die der Ziehgriff (10) eingeführt ist und auf denen er ruht, wobei im vorderen Teil der Aussparung (19), wo an den beiden kürzeren Seiten des Rechtecks ein Paar als Scharnierachsen wirkende Drehzapfen (21) angeordnet sind, eine Drehung des Ziehgriffs (10) ermöglicht wird, wobei am mittleren und vorderen Teil des Rechtecks auch eine schmalere Aussparung (22) ist, an der die Vorderwand des Ziehgriffs (10) schwenkt und die in der Nähe der Drehzapfen (21) breiter wird, und dadurch, dass er den Ziehgriff (10) in einer mit der Aussparung (19) übereinstimmenden Weise einschließt, die an ihrem unteren Teil Vorsprünge (27) einschließt, in deren Mitte eine kreisförmige Öffnung (28) am äußersten Ende der Platte geöffnet worden ist, durch die die Drehzapfen (21) eingeführt werden, wodurch die Scharnieranordnung (10) des Ziehgriffs erzeugt wird.

6. Bodenkasten (1a, 1b), der nach einem der vorhergehenden Ansprüche Anschlussmodule für elektrische, Sprach- und Daten-, Multimediamechanismen oder andere Arten von Installationen in seinem Inneren einschließt, **dadurch gekennzeichnet, dass** Ausnehmungen (31a, 31b) über den Deckel (2a, 2b) des Kastens (1a, 1b) zum Austritt der Kabel der angeschlossenen Vorrichtungen verteilt sind, sodass es angrenzend an die Ausnehmung einen in Richtung des Inneren des Kastens gewandte Rippe (32a, 32b) gibt, wobei eine Nut (33) erzeugt wird, wobei von der Rippe (32a, 32b) selbst Flansche (34) ausgehen, die zum Äußeren der Ausnehmung (31a, 31b) gewandt sind, die zum Befestigen der flexiblen Kabeldurchführungsfenster (9a, 9b) nützlich sind, die die gleiche Form wie die Ausnehmung (31a, 31b) aufweisen, und zwei Hauptebenen, wobei die erste Ebene (35) dem freigelegten Teil entspricht, wenn das Fenster auf dem Deckel montiert ist, und eine zweite Ebene (36) wiederum dem Umfang des Teils entspricht, das zum Befestigen des Kabeldurchgangsfensters auf dem Hauptdeckel dient, in einer derartigen Weise, dass der obere Teil der Ebene (36) auf der Nut (33) der Ausnehmung (31a, 31b) montiert ist, wobei eine Nut (37) zwischen den beiden Ebenen angeordnet ist, worin die Rippe (32) der Ausnehmung (31a, 31b) eingelassen ist, wobei Durchgangsöffnungen (38) im Inneren der Nut (37) angeordnet sind, durch die die Flansche (34) der Ausnehmung (31a, 31b) eingeführt werden.

7. Bodenkasten (1a, 1b), der nach einem der vorhergehenden Ansprüche Anschlussmodule für elektrische, Sprach- und Daten-, Multimediamechanismen oder andere Arten von Installationen in seinem Inneren einschließt, **dadurch gekennzeichnet, dass** der Rahmen aus einem vorzugsweise aus Kunststoff gefertigten Teil mit derselben Form wie der Bodenkasten (1a, 1b) gebildet ist, wobei er eine Klappe (46a, 46b) aufweist, die auf dem Boden ruht und sich senkrecht in Richtung des Inneren zum Bilden der Wände (49) fortsetzt, die die Wände der Deckel (2a, 2b) beeinflussen, wobei das Einpassen für die Verschlüsse des Bodenkastens (1a, 1b) bereitgestellt wird, wobei sie in Flächen (50a, 50b) enden, in die die Module für Mechanismen (4a, 4b) bündig und mittels Einrasten eingebaut sind, die sich mit einer Drehung von etwa 90° fortsetzen, wobei Wände (51a, 51b) erzeugt werden, die dem Kasten die Tiefe geben, wodurch Raum für den Kabelaustritt ermöglicht wird, dessen Wände an der Unterseite (52) des Rahmens (3a, 3b) enden, der, sobald die Module für Mechanismen (4a, 4b) installiert sind, den Kasten geschlossen hält, wobei verhindert wird, dass Benutzer auf die stromführenden Teile zugreifen, wobei die Module für Mechanismen (4a, 4b) mittels Flanschen (53) befestigt sind, die am hinteren Ende des oberen Teils der Module an den in den Flächen (50a, 50b) des Rahmens (3a, 3b) hergestellten Öffnungen (54) angeordnet sind, und wiederum durch Flansche (55), die am vorderen Ende des unteren Teils der Module angeordnet sind, an abgeschrägten Aussparungen (56) an der Unterseite (52), wo Säulen (57) angeordnet sind, die eine innere schwalbenschwanzförmige Führung aufweisen, in die senkrecht zu der Säule (57) ein T-förmiges Teil (58) eingeführt wird, um die Kabel der mit den Mechanismen verbundenen Vorrichtungen zu führen und zu befestigen.

8. Bodenkasten (1a, 1b), der nach einem der vorhergehenden Ansprüche Anschlussmodule für elektrische, Sprach- und Daten-, Multimediamechanismen oder andere Arten von Installationen in seinem Inneren einschließt, **dadurch gekennzeichnet, dass** die Unterseite (52) der Rahmen (3a, 3b) leicht in Richtung der Mitte des Kastens geneigt ist, um zu verhindern, dass Wasser darin eingeschlossen wird, und in einer derartigen Weise, dass das Wasser zum Gleiten in Richtung zusätzlicher Entwässerungslöcher (60) gebracht wird, die in der Verbindung der Ebenen in der Unterseite (52) platziert sind, wodurch ein Nachaußenleiten des Wassers ermöglicht wird.

9. Bodenkasten (1a, 1b), der nach einem der vorhergehenden Ansprüche Anschlussmodule für elektrische, Sprach- und Daten-, Multimediamechanismen oder andere Arten von Installationen in seinem Inneren einschließt, **dadurch gekennzeichnet, dass** die Module für Mechanismen (4a, 4b) aus zwei Teilen bestehen, einem vorderen Teil (62, 78) und einem hinteren Teil (63, 79), die mittels in den Seiten des vorderen Teils (62, 78) hergestellten Öffnungen (65) und auf der Seite des hinteren Teils (63, 79) angeordneten Flanschen (66) miteinander verbunden sind, wobei das vordere Teil (62, 78) ein Teil ist, das durch eine ebene Fläche (62a, 78a) gebildet wird, an deren Ende die Flansche (53) angeordnet sind, die zum Befestigen der Module (4a, 4b) an dem Rahmen (3a, 3b) dienen, und wobei sich an dem gegenüberliegenden Ende das Teil mit einer etwa senkrechten Drehung fortsetzt, wobei die Fläche (62b, 78b) gebildet wird, in deren Mitte die Platten (67) der Mechanismen (6) und/oder Mechanismen (7) mittels Einrasten montiert sind, an deren Ende es eine Fläche (62c, 78c) senkrecht nach außen gibt, wobei an dem gegenüberliegenden Ende Flansche (55) angeordnet sind, die die Befestigung an dem Rahmen (3a, 3b) ermöglichen, und wobei andererseits das hintere Teil (63, 79) Flächen mit rechteckiger Prismenform ohne die obere Fläche oder die vordere Fläche aufweist, dessen obere hintere Fläche einen Hohlraum (71, 83) zum Ruhen der Module (4a, 4b) einschließt, und wobei die seitlichen Flächen (63b) des hinteren Teils die Flansche (66) einschließen, die mit dem vorderen Teil (62) gekoppelt werden, und dadurch, dass eine Reihe von Vorperforationen (72, 73a, 73b) unterschiedlicher Formen und Größen außen auf der hinteren Fläche (63a, 79a) hergestellt worden sind, um dem Installateur zu helfen, Kabel (64a, 64b), Rohre und sogar Verbinder (80) in das Innere des Volumens einzuführen, in dem die Mechanismen verdrahtet sind, und durch Verbinden zwei der vorgenannten Perforationen wird der Flansch (74) erhalten, der entlang seines Inneren perforiert ist, wodurch der Durchgang einer Kabel (64)-Klemme (75) ermöglicht wird, die die Spannungen verringert, unter denen die Kabel während des Installationsvorgangs stehen.

10. Bodenkasten (1a, 1b), der nach einem der vorhergehenden Ansprüche Anschlussmodule für elektrische, Sprach- und Daten-, Multimediamechanismen oder andere Arten- von Installationen in seinem Inneren einschließt, **dadurch gekennzeichnet, dass** die Module für Mechanismen spezifischen Formats (4a) einen geschwächten Bereich über dem gesamten Rand zwischen den Flächen (62b) und (62c) einschließen, in einer derartigen Weise, dass sie als Scharnier wirken, wodurch ein Nachaußenfalten ermöglicht wird, wo die Fläche (62c) Flansche (62d) an jedem seitlichen Ende einschließt, die in die vertikalen Wände (62b) eingehakt sind, und nahe dem Rand, in dem die Faltung hergestellt ist, Räume (70) gelassen worden sind, die einen Abfluss von Wasser ermöglichen, und der entlang des Inneren der hinteren Fläche (63a) vier Säulen (76) mit unterschiedlichen Höhen und ein Paar Flansche (77) aufweist, an deren Basis Öffnungen hergestellt worden sind, die dieselbe Funktion wie die Säulen (76) haben, die das Befestigen von Mechanismen sowohl mittels Schrauben als auch Einrasten ermöglichen.

11. Bodenkasten (1a, 1b), der nach einem der vorhergehenden Ansprüche Anschlussmodule für elektrische, Sprach- und Daten-, Multimediamechanismen oder andere Arten von Installationen in seinem Inneren einschließt, **dadurch gekennzeichnet, dass** die Module für Mechanismen standardisierten Formats (4b) die Rippen (84) auf ihrer hinteren Fläche (79a) enthalten, die durch leicht voneinander beabstandete Zweiergruppen gebildet sind, die die Fläche (79a) vertikal kreuzen und sich entlang einer unteren Fläche (79c) fortsetzen, wodurch eine Befestigung einer Raumplatte (85) in dem dazwischen erzeugten Raum ermöglicht wird, wodurch eine physische und elektromagnetische Trennung zwischen den Leistungsschaltungen und Sprach- und Datenschaltungen ermöglicht wird.

12. Bodenkasten (1a, 1b), der nach einem der vorhergehenden Ansprüche Anschlussmodule für elektrische, Sprach- und Daten-, Multimediamechanismen oder andere Arten von Installationen in seinem Inneren einschließt, **dadurch gekennzeichnet, dass** die Abstandsplatte (85) ein Teil ist, das im Allgemeinen aus einer Metallplatte mit einer vorzugsweise rechteckigen Form gebildet ist, wobei senkrechte Schnitte an einem der Enden gemacht worden sind, und das geschnittene Material anschließend zum Erzeugen von Flanschen (86) gefaltet wurde, die eine direkte Verbindung mit den Schnellverbindungsböden ermöglichen und an deren gegenüberliegenden Ende es eine Längsaussparung (87) gibt, um das Brechen des Endes (88) in den Fällen zu erleichtern, in denen es die Wände der Module (4a, 4b) beeinflusst.

13. Bodenkasten (1a, 1b), der nach einem der vorhergehenden Ansprüche Anschlussmodule für elektrische, Sprach- und Daten-, Multimediamechanismen oder andere Arten von Installationen in seinem Inneren einschließt, **dadurch gekennzeichnet, dass** eine seiner Varianten eine vorzugsweise kreisförmige Form aufweist, die eine ungerade Anzahl an Modulen einschließt, in einer derartigen Weise, dass die Mechanismen (5, 6, 7) einander nicht gegenüberliegend angeordnet sind, wodurch die Verbindung durch die Benutzer erleichtert wird.

## Revendications

1. Boîtier de sol (1a, 1b) qui comporte à l'intérieur des modules de raccordement pour des éléments électriques, vocaux et de données, multimédia ou autres types d'installation, comprenant :
un couvercle (2a, 2b) ;
un châssis (3a, 3b) ;
des modules (4a, 4b) à l'intérieur, distingués l'un de l'autre par le format du mécanisme (5, 6, 7) qui peut être installé dedans,
**caractérisé en ce que**
une rainure (59) a été faite autour du contour du châssis (3a, 3b) où le couvercle (2a, 2b) repose, la rainure (59) étant légèrement inclinée pour empêcher l'eau d'être emprisonnée dedans et de telle sorte qu'elle force l'eau à glisser vers des orifices de drainage (60), permettant à l'eau d'être canalisée vers l'extérieur.

2. Boîtier de sol (1a, 1b) qui comporte des modules de raccordement pour des éléments électriques, vocaux et de données, multimédia ou autres types d'installation, selon la revendication précédente, **caractérisé en ce que** le couvercle (2a, 2b) est composé d'un couvercle principal (8a, 8b), fait de préférence en matériau thermoplastique et résistant aux tensions mécaniques ayant une forme géographique équivalente à la forme du boîtier de sol (1a, 1b), le long du contour duquel des pivots (41) ont été disposés pour leur utilisation comme axe charnière, permettant l'ouverture du boîtier en le faisant pivoter autour, des découpes (31a, 31b) le long du contour desquelles des fenêtres de sortie des câbles flexibles (9a, 9b) sont disposées, qui sont adaptées à la forme de sortie des câbles et, à l'extrémité opposée des pivots (41), des rebords (44) sont disposés qui sont utilisés comme fermetures par clipsage du couvercle, un renfoncement rectangulaire (19) dans lequel la poignée de traction (10) est disposée se trouvant également sur la partie supérieure du couvercle principal (8a, 8b), facilitant l'ouverture du couvercle (2a, 2b), comprend des nervures (15), dans lequel la géométrie varie en fonction de la forme du boîtier, la hauteur desdites nervures augmentant progressivement des extrémités vers l'intérieur.

3. Boîtier de sol (1a, 1b) qui comporte des modules de raccordement pour des éléments électriques, vocaux et de données, multimédia ou autres types d'installation, selon les revendications 1 et 2, **caractérisé en ce que** l'ouverture du couvercle (2a, 2b) est obtenue en faisant tourner les pivots (41) qui ont, à leurs extrémités, deux plans inclinés (42) allant du centre du pivot (41) dans le même sens que l'entrée du couvercle (2a, 2b) dans le châssis (3a, 3b), permettant l'introduction et l'extraction du couvercle dans les orifices (43), de préférence de forme allongée, du châssis (3a, 3b), sur lequel le couvercle (2a, 2b) pivote au moyen d'un axe, lesdits orifices (43) étant répartis sur le châssis (3a, 3b) et variant en nombre en fonction de la forme du boîtier, permettant, ensuite, un changement dans le sens d'ouverture du couvercle, et **en ce que** la fermeture des couvercles (2a, 2b) est obtenue au moyen de rebords (44) qui sont ancrés par pression dans lesdits orifices (43) du châssis (3a, 3b) non utilisés pour former une charnière (40).

4. Boîtier de sol (1a, 1b) qui comporte à l'intérieur des modules de raccordement pour des éléments électriques, vocaux et de données, multimédia ou autres types d'installation, selon l'une quelconque des revendications précédentes, **caractérisé en ce que** le couvercle supérieur principal (8a, 8b) comporte, de préférence, un renfoncement en forme géométrique (11a, 11b) coïncidant avec la forme externe du sol (1a, 1b), préparé de sorte que l'installateur puisse installer le matériau de finition le plus adapté et/ou avec des finitions métalliques, de sorte à former une surface complètement alignée avec le reste du boîtier, qui est fixé au renfoncement (11a, 11b)
au moyen de rebords en saillie (13) répartis autour du bord desdits couvercles en alignement (12a, 12b), s'insérant dans les encoches (14) réparties équitablement autour du périmètre du renfoncement susmentionné (11a, 11b).

5. Boîtier de sol (1a, 1b) qui comporte à l'intérieur des modules de raccordement pour des éléments électriques, vocaux et de données, multimédia ou autres types d'installation, selon l'une quelconque des revendications précédentes, **caractérisé en ce que** le renfoncement de préférence rectangulaire (19) du couvercle (2a, 2b) a des renfoncements plus profonds (20) dans lesquels la poignée de traction (10) est introduite et repose, dans la partie avant du renfoncement (19), où une paire de pivots (21) qui agissent comme axes charnières sont disposés sur les deux plus petits côtés du rectangle, permettant la rotation de la poignée de traction (10), un renfoncement plus étroit (22) se trouvant également sur la partie centrale et avant du rectangle sur lequel la paroi avant de la poignée de traction (10) pivote et qui s'élargit à proximité des pivots (21), et **en ce qu'**il comporte la poignée de traction (10) de façon concomitante avec le renfoncement (19), qui comporte, sur sa partie inférieure, des saillies (27) au centre desquelles un orifice circulaire (28) a été ouvert à l'extrémité la plus externe de la plaque par où les pivots (21) sont introduits, créant l'assemblage à charnière de la poignée de traction (10).

6. Boîtier de sol (1a, 1b) qui comporte des modules de raccordement pour des éléments électriques, vocaux et de données, multimédia ou autres types d'installation, selon l'une quelconque des revendications précédentes, **caractérisé en ce que** des découpes (31a, 31b) sont réparties sur le couvercle (2a, 2b) du boîtier (1a, 1b) pour la sortie des câbles des dispositifs raccordés, de sorte qu'au bord de la découpe il y a une nervure (32a, 32b) orientée vers l'intérieur du boîtier, créant une rainure (33) provenant de la nervure (32a, 32b) même, des rebords (34) orientés vers l'extérieur de la découpe (31a, 31b) qui sont utiles pour fixer les fenêtres de passage des câbles flexibles (9a, 9b), ayant la même forme que la découpe (31a, 31b), et deux plans principaux, le premier plan (35) correspondant à la partie exposée une fois que la fenêtre a été assemblée sur le couvercle et un deuxième plan (36) correspondant, ensuite, au périmètre de la partie qui sert à fixer la fenêtre de passage des câbles au couvercle principal, de telle sorte que la partie supérieure du plan (36) est assemblée sur la rainure (33) de la découpe (31a, 31b), une rainure (37) étant disposée entre les deux plans dans laquelle la nervure (32) de la découpe (31a, 31b) est incorporée, dans lequel des orifices traversants (38) sont disposés à l'intérieur de ladite rainure (37) par où les rebords (34) de la découpe (31a, 31b) seront introduits.

7. Boîtier de sol (1a, 1b) qui comporte à l'intérieur des modules de raccordement pour des éléments électriques, vocaux et de données, multimédia ou autres types d'installation, selon l'une quelconque des revendications précédentes, **caractérisé en ce que** le châssis est formé à partir d'une partie manufacturée, de préférence, à partir de matériau plastique de la même forme que le boîtier de sol (1a, 1b), ayant un rabat (46a, 46b) qui repose sur le sol et continue perpendiculairement vers l'intérieur pour former les parois (49) qui interféreront avec les parois des couvercles (2a, 2b), fournissant l'adaptation pour la fermeture du boîtier de sol (1a, 1b), terminant dans des surfaces (50a, 50b) dans lesquelles les modules pour les mécanismes (4a, 4b) sont incorporés en alignement et au moyen de clipsage, qui continuent avec une rotation de 90° approximativement, créant des parois (51a, 51b) qui donnent une profondeur au boîtier, laissant de l'espace pour la sortie des câbles, dont les parois terminent au fond (52) du châssis (3a, 3b) qui, une fois que les modules pour les mécanismes (4a, 4b) sont installés, laisse le boîtier fermé, empêchant les utilisateurs d'accéder aux parties actives, où lesdits modules pour les mécanismes (4a, 4b) sont fixés au moyen de rebords (53) disposés à l'extrémité arrière de la partie supérieure des modules aux orifices (54) réalisés sur les surfaces (50a, 50b) du châssis (3a, 3b) et, ensuite, par des rebords (55) disposés à l'extrémité avant de la partie inférieure des modules aux renfoncements biseautés (56) au fond (52), où des colonnes (57) ayant un guide de type en queue de ronde sont disposées, où une partie en forme de T (58) est introduite, perpendiculaire à ladite colonne (57), pour guider et fixer les câbles des dispositifs raccordés aux mécanismes.

8. Boîtier de sol (1a, 1b) qui comporte à l'intérieur des modules de raccordement pour des éléments électriques, vocaux et de données, multimédia ou autres types d'installation, selon l'une quelconque des revendications précédentes, **caractérisé en ce que** le fond (52) des châssis (3a, 3b) est légèrement incliné vers le centre du boîtier, pour empêcher l'eau d'être emprisonnée dedans et de telle sorte qu'il force l'eau à glisser vers des orifices de drainage supplémentaires (61) placés dans l'union des plans au fond (52), permettant à l'eau d'être canalisée vers l'extérieur.

9. Boîtier de sol (1a, 1b) qui comporte des modules de raccordement pour des éléments électriques, vocaux et de données, multimédia ou autres types d'installation, selon l'une quelconque des revendications précédentes, **caractérisé en ce que** les modules pour les mécanismes (4a, 4b) sont composés de deux parties, une partie avant (62, 78) et une partie arrière (63, 79), reliées ensemble au moyen d'orifices (65) réalisés sur les côtés de la partie avant (62, 78) et des rebords (66) disposés sur le côté de la partie arrière (63, 79), où la partie avant (62, 78), est une partie formée par une surface plate (62a, 78a), à l'extrémité de laquelle les rebords (53) qui servent à fixer les modules (4a, 4b) au châssis (3a, 3b) sont disposés et, à l'extrémité opposée, la partie continue avec une rotation, approximativement perpendiculaire, formant la surface (62b, 78b) dans le centre de laquelle les plaques (67) des mécanismes (6) et/ou mécanismes (7) sont assemblées au moyen de clipsage, à l'extrémité de laquelle il y a une surface (62c, 78c) perpendiculaire vers l'extérieur, des rebords (55) étant disposés à l'extrémité opposée qui permettent la fixation au châssis (3a, 3b) et, d'autre part, la partie arrière (63, 79) a des surfaces ayant une forme de prisme rectangulaire sans la surface supérieure ou la surface avant, dont la surface arrière supérieure comporte une cavité (71, 83) pour reposer les modules (4a, 4b) et dans lequel les surfaces latérales (63b) de la partie arrière comportent les rebords (66) qui seront couplés à la partie avant (62), et **en ce qu'**un ensemble de pré-perforations (72, 73a, 73b) de formes et de tailles différentes ont été réalisées à l'extérieur de la surface arrière (63a, 79a) pour aider l'installateur à introduire des câbles (64a, 64b), des tubes voire même des raccords (80) à l'intérieur du volume dans lequel les mécanismes sont câblés, et en reliant deux des perforations susmentionnées nous obtenons le rebord (74) perforé le long de son intérieur, permettant le passage d'une pince (75) de câble (64) qui réduit les tensions subies par les câbles pendant le processus d'installation.

10. Boîtier de sol (1a, 1b) qui comporte à l'intérieur des modules de raccordement pour des éléments électriques, vocaux et de données, multimédia ou autres types d'installation, selon l'une quelconque des revendications précédentes, **caractérisé en ce que** les modules pour les mécanismes de format spécifique (4a) comportent une zone affaiblie le long du bord entre les surfaces (62b) et (62c) de telle sorte qu'ils agissent comme une charnière, permettant leur pliage vers l'extérieur où la surface (62c) comporte des rebords (62d) à chaque extrémité latérale qui sont imbriqués dans les parois verticales (62b) et, à proximité du bord où le pli est réalisé, des espaces (70) ont été laissés qui permettent le drainage de l'eau, et ayant le long de l'intérieur de la surface arrière (63a) quatre colonnes (76) de différentes hauteurs et une paire de rebords (77) à la base desquels des orifices ont été réalisés ayant la même fonction que les colonnes (76), qui permettent la fixation de mécanismes au moyen de vis ainsi que de clipsage.

11. Boîtier de sol (1a, 1b) qui comporte à l'intérieur des modules de raccordement pour des éléments électriques, vocaux et de données, multimédia ou autres types d'installation, selon l'une quelconque des revendications précédentes, **caractérisé en ce que** les modules pour les mécanismes de format standardisé (4b) contiennent des nervures (84) sur leur surface arrière (79a) formées par des groupes de deux et légèrement espacées entre elles, qui traversent verticalement la surface (79a) et continuent le long d'une surface inférieure (79c), permettant la fixation d'une plaque de séparation (85) dans l'espace créé entre elles, permettant ainsi une séparation physique et électromagnétique entre les circuits de puissance et les circuits de voix et de données.

12. Boîtier de sol (1a, 1b) qui comporte à l'intérieur des modules de raccordement pour des éléments électriques, vocaux et de données, multimédia ou autres types d'installation, selon l'une quelconque des revendications précédentes, **caractérisé en ce que** la plaque de séparation (85) est une partie généralement formée à partir d'une plaque métallique de préférence de forme rectangulaire, dans laquelle des coupes perpendiculaires ont été réalisées à l'une des extrémités, pliant ultérieurement le matériau découpé pour créer des rebords (86) qui permettent un raccordement direct aux bases de raccordement rapides et à l'extrémité opposée desquelles il y a un renfoncement longitudinal (87) pour faciliter la rupture de l'extrémité (88) dans ces cas où elle interfère avec les parois des modules (4a, 4b).

13. Boîtier de sol (1a, 1b) qui comporte des modules de raccordement pour des éléments électriques, vocaux et de données, multimédia ou autres types d'installation, selon l'une quelconque des revendications précédentes, **caractérisé en ce que** l'une de ses variantes a une forme préférablement circulaire qui comporte un nombre impair de modules, de telle sorte que les mécanismes (5, 6, 7) ne soient pas disposés à l'opposé les uns des autres, facilitant ainsi le raccordement par les utilisateurs.
